# EUROPEAN PATENT SPECIFICATION

(11) **EP 2 913 980 B1**
(45) Date of publication and mention of the grant of the patent: **26.07.2017**
(21) Application number: 14194306.8
(22) Date of filing: 21.11.2014
(51) Int. Cl.: H04L 29/08

(54) **METHOD AND DEVICE FOR ROUTER ACCESS CONTROL, AND ROUTER**
VERFAHREN UND VORRICHTUNG FÜR ROUTERZUGANGSSTEUERUNG UND ROUTER
PROCÉDÉ ET DISPOSITIF DE COMMANDE D'ACCÈS AU ROUTEUR ET ROUTEUR

(30) Priority: 27.02.2014 CN 201410069570
(43) Date of publication of application: 02.09.2015
(73) Proprietor: Xiaomi Inc., Beijing 100085 (CN)
(72) Inventor: Liu, Tiejun, Haidian District (CN); Li, Zheng, Haidian District (CN); Cheng, Liang, Haidian District (CN)
(74) Representative: Hanna Moore + Curley

(56) References cited:
- EP-A2- 1 209 581
- US-A1- 2008 291 899
- US-A1- 2014 019 352

## Description

### TECHNICAL FIELD

The present disclosure relates to the field of network equipment technology, and more particularly, to a method and a device for router access control, and a router.

### BACKGROUND

With the development of networked information resources, there are more and more enterprises joining in the information resource network. The networked information resource may not only change current production structure, industry structure and labor structure, but also has dramatically changed people's lifestyle, ways of social contact, manners of working and learning.

Some of the traditional social public resources have been added into the information resource network. For instance, hospital registration can be implemented by the Internet, booking a museum and other showplaces can be made by the Internet; furthermore, by the Internet, hotels, train and airline tickets can be booked. When the user obtains those social public resources, he needs to use a browser on the computer, mobile phone or other smart terminal to access a destination website, and perform operations of filling in forms and registration to request the resources. Nevertheless, if this resource request is unsuccessful, the request may have to be implemented again after repeatedly performing the same operations many times, which means the time taken for completing the procedure for obtaining the resource on-line can be long and inconvenient.

US 2008/291899 A1, US 2014/019352 A1, EP 1,209,581 A2, US 2004/049673 A1, and US 2009/193129 A1 are representative of the current state of the art.

### SUMMARY

The present disclosure provides a method and a device for router access control, and a router, in accordance with claims which follow, which aim to solve the above-mentioned problems.

According to a first aspect of embodiments of the present disclosure, there is provided a method for accessing a network resource comprising a user performing operations of filling in forms and registration with content information in a browser on a user terminal, submitting a post request to a destination web address containing the content information to request the resource, through a router, the method comprises:the router obtaining once from the browser, the destination web address and the content information;the router generating the post request in accordance with the content information;the router sending the post request to the destination web address;the router obtaining a return message returned from the destination web address in accordance with the post request;the router judging whether the return message is a predetermined return message of the network resource obtaining procedure;if the return message is not the predetermined return message, the router continuing to re-send the post request to the destination web address until the return message is the predetermined return message; and if the return message is the predetermined return message, generating a prompt message in accordance with the return message; and sending the prompt message to at least one predetermined receiving user terminal.

In combination with the first aspect, in a second possible implementing manner of the first aspect, the method further includes:

obtaining a payment information in the return message if the return message is the predetermined return message; generating a payment pushing message in accordance with the payment information; and sending the payment pushing message to at least one predetermined receiving terminal.

In combination with the first or second possible implementing manner of the first aspect, in a third possible implementing manner of the first aspect, sending the pushing message to the predetermined receiving terminal is performed in a format including one of a text message, a mail, a webpage message, an Internet pushing message, and a LAN notification message, or a combination thereof.

In combination with the first aspect, in a fourth possible implementing manner of the first aspect, the obtaining the destination web address and the destination post content includes:

receiving a post instruction sent from a sending terminal, or inputted from an input device that is connected to the router, the post instruction including at least the destination web address and the destination post content; and extracting the destination web address and the destination post content from the post instruction.

In combination with the first aspect, in a fifth possible implementing manner of the first aspect, the obtaining the destination web address and the destination post content includes:

receiving a post instruction sent from a sending terminal using an application program, the post instruction including at least the destination post content, the application program being bound with a predetermined web address; determining the predetermined web address bound by the application program as the destination web address; and extracting the destination post content from the post instruction.

In combination with the first aspect, in a sixth possible implementing manner of the first aspect, the obtaining the destination web address and the destination post content includes:

receiving a reference post request sent from a sending terminal, the reference post request including at least a reference web address and a reference post content; judging whether a predetermined web address database includes the reference web address; extracting the reference web address and the reference post content from the reference post request if the predetermined web address database includes the reference web address; and determining the reference web address as the destination web address and determining the reference post content as the destination post content.

In combination with the fourth possible implementing manner of the first aspect, the fifth possible implementing manner of the first aspect or the sixth possible implementing manner of the first aspect, in a seventh possible implementing manner of the first aspect, the post instruction or the reference post request includes information of a predetermined receiving terminal for receiving the pushing message, and the method further includes:

extracting the information of the predetermined receiving terminal from the post instruction or the reference post request.

According to a second aspect of embodiments of the present disclosure, there is provided a device for router access control, which is applied to a router, including:
an object obtaining unit configured to obtain once from a browser on a user terminal, or inputted from an input device that is connected to the router, a destination web address and content information to be submitted to the destination web address through a post request by the user terminal;a request generating unit configured to generate a post request in accordance with the content information;a request sending unit configured to send the post request to the destination web address;a return message obtaining unit configured to obtain a return message returned from the destination web address in accordance with the post request; and a message judging unit configured to judge whether the return message is a predetermined return message of the network resource obtaining procedure, wherein if the return message is not the predetermined return message, the request sending unit is configured to continue to send the post request to the destination web address until the return message is the predetermined return message;a first message generating unit configured to generate a prompt message in accordance with the return message if the return message is the predetermined return message; and a first message sending unit configured to send the prompt message to at least one predetermined receiving user terminal.

In combination with the second aspect, in a second possible implementing manner of the second aspect, the device further includes:

a payment information obtaining unit configured to obtain a payment information in the return message if the return message is the predetermined return message; a second pushing message generating unit configured to generate a payment pushing message in accordance with the payment information; and a second pushing message sending unit configured to send the payment pushing message to at least one predetermined receiving terminal.

In combination with the second aspect, in a third possible implementing manner of the second aspect, the object obtaining unit may include:

a first instruction receiving unit configured to receive a post instruction sent from a sending terminal, or inputted from an input device that is connected to the router, the post instruction including at least the destination web address and the destination post content; and an object extracting unit configured to extract the destination web address and the destination post content from the post instruction.

In combination with the second aspect, in a fourth possible implementing manner of the second aspect, the object obtaining unit includes:

a second instruction receiving unit configured to receive a post instruction sent from a sending terminal using an application program, the post instruction including at least the destination post content, the application program being bound with a predetermined web address; a destination web address determining unit configured to determine the predetermined web address bound by the application program as the destination web address; and a destination post content extracting unit configured to extract the destination post content from the post instruction.

In combination with the second aspect, in a fifth possible implementing manner of the second aspect, the object obtaining unit includes:

a request receiving unit configured to receive a reference post request sent from a sending terminal, the reference post request including at least a reference web address and reference post content; a web address judging unit configured to determine whether a predetermined web address database includes the reference web address; a reference object extracting unit configured to extract the reference web address and the reference post content from the reference post request if the predetermined web address database includes the reference web address; and a destination object determining unit configured to determine the reference web address as the destination web address and determine the reference post content as the destination post content.

In combination with the third possible implementing manner of the second aspect, the fourth possible implementing manner of the second aspect or the fifth possible implementing manner of the second aspect, in a sixth possible implementing manner of the second aspect, the post instruction or the reference post request includes information of a predetermined receiving terminal for receiving the pushing message, and the device further includes:

a terminal information extracting unit configured to extract the information of the predetermined receiving terminal from the post instruction or the reference post request.

According to a third aspect of the embodiments of the present disclosure, there is provided a computer program, which when executing on a processor of a router, performs the method according to the first aspect of the embodiments of the present disclosure.

The technical solutions of the embodiments of the present disclosure can include the following advantageous effects:

during the procedure of obtaining the network resource in the present disclosure, the router only needs to obtain the destination web address and the destination post content once (it is usually the first time in the procedure of obtaining the network resource), and then in the subsequent procedure of obtaining the network resource, whether the return message of this network resource obtaining procedure is the predetermined return message is judged, and when the predetermined return message is not obtained, the post request can be automatically sent many times until the return message of this network resource obtaining procedure is the predetermined return message.

In one aspect, the method for router access control provided by the present disclosure can automatically complete the subsequent post request sending procedure many times until the predetermined return message is returned, only by receiving the parameters (including the destination web address and the destination post content) once, thereby the problem with the prior art that the user needs to input or perform an operation repeatedly if the first request has failed can be avoided, and the operation becomes easy and convenient.

In another aspect, in the method for router access control provided by the present disclosure, during the procedure of obtaining the network resource, the user only needs to send the destination web address and the destination post content once to the router through the terminal, and interactions among all the remaining data are totally implemented between the router and the server corresponding to the destination web address. In comparison with the related art, the method of the present disclosure does not need to forward the return message of the post request to the user by the router and send the post request again by the user after operations every time, which reduces the number of interactions between the router and the terminal, and further decreases the time consumed for the procedure of obtaining the network resource, such that an interval of two adjacent post requests sent by the router is reduced, the number of sending post requests through the router per unit time is increased, and a success rate of obtaining the finite network resource is significantly improved.

It is to be understood that both the foregoing general description and the following detailed description are exemplary and explanatory only.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an illustrative flow chart of a method for router access control according to an exemplary embodiment.
Fig. 2 is an illustrative flow chart of step S15 in Fig. 1 according to an exemplary embodiment.
Fig. 3 is an illustrative flow chart of a method for router access control according to an exemplary embodiment.
Fig. 4 is an illustrative flow chart of a method for router access control according to an exemplary embodiment.
Fig. 5 is an illustrative flow chart of a method for router access control according to an exemplary embodiment.
Fig. 6 is an illustrative flow chart of a method for router access control according to an exemplary embodiment.
Fig. 7 is an illustrative flow chart of a method for router access control according to an exemplary embodiment.
Fig. 8 is a block diagram of a device for router access control according to an exemplary embodiment.
Fig. 9 is a block diagram of a device for router access control according to an exemplary embodiment.
Fig. 10 is a block diagram of a device for router access control according to an exemplary embodiment.
Fig. 11 is a block diagram of an electronic apparatus for implementing router access control according to an exemplary embodiment.
Fig. 12 is a block diagram of a server according to an exemplary embodiment.

The embodiments of the present disclosure are illustrated by the drawings above. The present disclosure hereinafter will be described in more detail. These drawings and description are only for exemplary embodiments and illustrative purposes to illustrate the concept of the present disclosure for those skilled in the art, rather than to limit the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention.

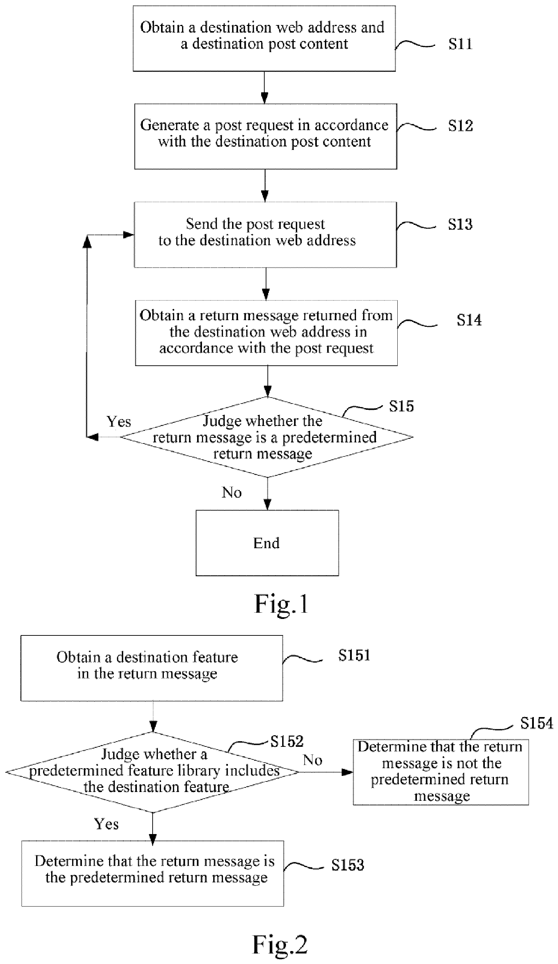

Fig. 1 is the flow chart of a method for router access control according to an exemplary embodiment. As shown in Fig. 1, the method for router access control is used in the router, and includes the following steps.

In step S11, a destination web address and a destination post content are obtained.

The destination web address refers to a web address to which the user needs to send a post request. The destination web address can be usual web addresses of shopping websites, such as the web addresses of websites of Taobao, Jingdong, Yihaodian, and it also can be the web addresses of websites for booking the tickets or booking other services, such as a ticket booking website, an airline ticket booking website, a hotel booking website, or a travelling booking website.

The destination post content refers to information expected to be submitted to the destination web address through the post request by the user. In the embodiments of the present disclosure, the destination post content can be set at discretion according to different destination web addresses. For instance, for the shopping websites, the destination post content can be a name, an amount, a payment method, a delivery selection, and a delivery address of the purchased good, etc.; for booking train tickets and airline tickets, the destination post content can be a departure location, a destination, a train number (a flight number), a train (plane) departure date, a seat selection, a number of booking tickets, identity information about the passengers, etc.; and for booking hotels or travel tickets, in accordance with the contents listed above, the destination post content just includes corresponding information as required.

The user can input the web address and the destination post content on the router directly. Also, the web address and the destination post content can be submitted to the router by using a terminal such as a mobile phone, a tablet, or a computer.

In step S12, a post request is generated according to the destination post content.

In this step, by using the format of post request in the existing network transport protocol, the corresponding post request is generated according to the destination post content, and the generated post request carries therein with information corresponding to the destination post content.

In step S13, the post request is sent to the destination web address.

The router sends the generated post request to a server corresponding to the destination web address through the network.

In step S14, a return message returned by the destination web address in accordance with the post request is obtained.

After the server corresponding to the destination web address receives the post request, it may return the return message correspondingly according to the post request such that the user can ensure a result of the post request is sent to the destination web address by the return message. The return message can include the predetermined specific characters, such as success or failure of booking tickets, and also can include information related to the destination post content, such as a departure, a destination, a train number (a flight number), a train (plane) departure date, a seat selection, the number of booking tickets, and identity information about the passengers.

With regard to the same destination web address, return messages of different types, formats and/or content can represent different results, whereas for a different destination web address, return messages of different types, formats and/or content are usually used to represent different results. Of course, there is no exclusion of similar websites using the same return message, such as Taobao and Tmall which belong to the same company, or all the websites for booking hotels.

In step S 15, whether the return message is a predetermined return message is judged.

In an exemplary embodiment of the present disclosure, referring to Fig. 2, step 15 may include the following steps.

In step S151, a destination feature in the return message is obtained.

The destination feature can uniquely recognize or confirm a feature of the return message. In the embodiments of the present disclosure, the destination feature can be a predetermined character, a predetermined number, a character and/or a number in at least one field corresponding to the destination post content, which are contained in the return message. In addition, the destination feature can also be a format of the return message, etc.

In step S152, whether a predetermined feature library includes the destination feature is judged.

For different destination web addresses, the predetermined feature libraries respectively related to the different destination web addresses can be established in advance, and after obtaining the return message, the destination feature can be compared with the feature in the predetermined feature library by using the table look-up scheme, etc.

When the predetermined feature library includes the destination feature, in step S153, it is determined that the return message is the predetermined return message. When the predetermined feature library excludes the destination feature, in step S154, it is determined that the return message is not the predetermined return message.

When the return message is not the predetermined return message, the process returns back to step S 13 and the post request continues to be sent to the destination web address until the return message is the predetermined return message.

According to the technical solution described above, in the method for router access control provided by the embodiments of the present disclosure, during the procedure of obtaining the network resource, the router only needs to obtain the destination web address and the destination post content once (it is usually the first time in the procedure of obtaining the network resource), and then in the subsequent procedure of obtaining the network resource, it determines whether the return message of this network resource obtaining procedure is the predetermined return message, and when the predetermined return message is not obtained, the post request can be automatically sent many times until the return message of this network resource obtaining procedure is the predetermined return message.

In one aspect, the method for router access control provided by the present disclosure can automatically complete the subsequent post request sending procedure many times until the predetermined return message is returned, only by receiving the parameters (including the destination web address and the destination post content) once, thereby the problem with the prior art that the user needs to input or perform an operation repeatedly if the first request has failed can be avoided, and the operation becomes easy and convenient.

In another aspect, in the method for router access control provided by the present disclosure, during the procedure of obtaining the network resource, the user only needs to send the destination web address and the destination post content once to the router through the terminal, and interactions among all the remaining data are totally implemented between the router and the server corresponding to the destination web address. In comparison with the related art, the method of the present disclosure does not need to forward the return message of the post request to the user by the router and send the post request again by the user after operations every time, which reduces the number of interactions between the router and the terminal, and further decreases the time consumed for the procedure of obtaining the network resource, such that an interval of two adjacent post requests sent by the router is reduced, the number of sending post requests through the router per unit time is increased, and a success rate of obtaining the finite network resource is significantly improved.

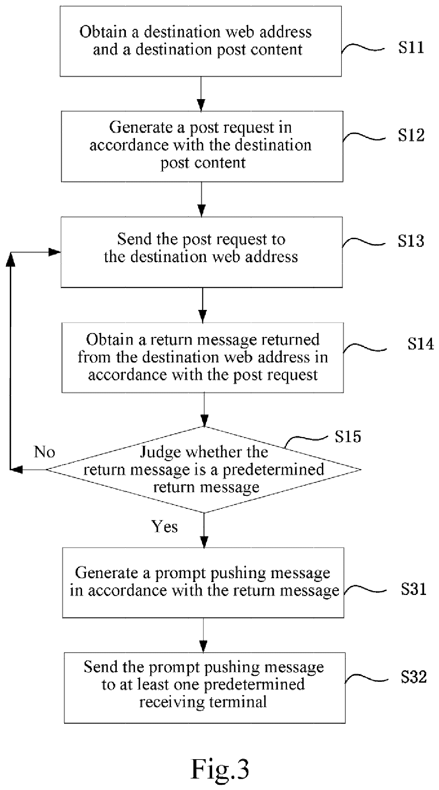

Fig. 3 is a flow chart of a method for router access control according to an exemplary embodiment. As shown in Fig. 3, based on the exemplary embodiment shown in Fig.1, the method can further include the following steps.

When the return message is the predetermined return message, in step S31, a prompt pushing message is generated in accordance with the return message.

The generated prompt pushing message carries with information corresponding to the return message.

In step S32, the prompt pushing message is sent to at least one predetermined receiving terminal.

The purpose of sending the prompt pushing message is to inform the user of the result of this post request. Also, sending the prompt pushing message enables the user to know the result of this post request quickly.

In the exemplary embodiments of the present disclosure, sending the pushing message to the predetermined receiving terminal is performed in a format including one of a text message, a mail, a webpage message, an Internet pushing message, and a LAN notification message, or a combination thereof. Also, it can be seen that the predetermined receiving terminal can be a mobile terminal, a computer, or other network terminals.

Through sending the prompt pushing message, the result of the post request can be quickly informed to the user in time in a manner preset by the user, which facilitates the user to check the return message, and implements the subsequent processes according to the return message, such as the payment, the cancellation of order, or the revision of information in the order.

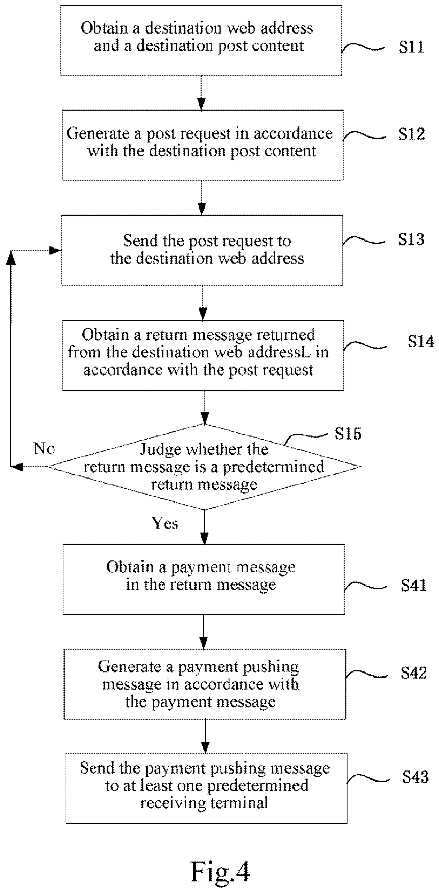

Fig. 4 is a flow chart of a method for router access control according to an exemplary embodiment. As shown in Fig. 4, based on the exemplary embodiment shown in Fig.1, the method can further include the following steps.

When the return message is the predetermined return message, in step S41, a payment information in the return message is obtained.

In the exemplary embodiment shown in Fig. 3, the purpose of sending the prompt pushing message is to inform the user of the result of this post request. In the exemplary embodiment of the present disclosure, in order to facilitate the operation of the user, when the return message is the predetermined return message, the payment information with which the return message carries can be obtained directly.

In step S42, a payment pushing message is generated in accordance with the payment information.

The generated payment information carries with information corresponding to the payment information, such as a payment link.

In step S43, the payment pushing message is sent to at least one predetermined receiving terminal.

This step can be referred to the details of step S32 described above, which will not be elaborated herein.

Moreover, with regard to the conditions of booking tickets or shopping without direct payment, such as cash on delivery, the return message can further carry with other information, such as a logistics information, which also can be pushed to the user.

When the user receives the payment pushing message, it actually is a tacit admission that the user has known the result of this post request promptly. Additionally, by the payment pushing message, the follow-up operations, such as a payment, can be implemented quickly, so as to reduce intermediate links between the return message and the payment needed by the user which saves time. From another point of view, it can prevent the user from being seduced or being mistaken to select the payment link, which decreases the risk of the user being cheated and enhances security.

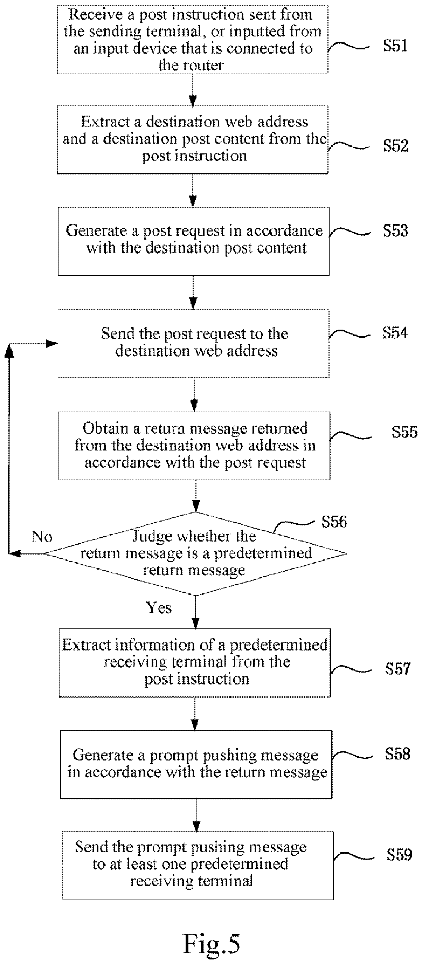

Fig. 5 is a flow chart of a method for router access control according to an exemplary embodiment. As shown in Fig. 5, the method for router access control is applied to the router, and includes the following steps.

In step S51, a post instruction sent by a sending terminal or inputted by an input device that is connected to the router is received.

The sending terminal can be connected to the router via a wired connection, such as a computer. Also, the sending terminal can be connected to the router via a wireless connection, such as a mobile terminal like a mobile phone, and a tablet.

With the development of intelligent functions of the router, existing routers can be provided with input devices, such as a touch panel and keys, thereby the post instruction inputted by the user can be received by the input devices, such as the touch panel and the keys provided on the router.

The post instruction includes at least the destination web address and the destination post content. In one embodiment, the router can provide an interface which is similar to a tablet. The user can send the post instruction by the sending terminal or input the post instruction directly on the router.

In step S52, the destination web address and the destination post content are extracted from the post instruction.

In step S53, a post request is generated in accordance with the destination post content.

In step S54, the post request is sent to the destination web address.

In step S55, a return message returned by the destination web address in accordance with the post request is obtained.

In step S56, whether the return message is a predetermined message is judged.

When the return message is not the predetermined return message, the process returns back to step S54 to continue to send the post request to the destination web address.

When the return message is the predetermined return message, in step S57, information of a predetermined receiving terminal is extracted from the post instruction.

The post instruction includes the information of the predetermined receiving terminal for receiving the pushing message. The information of the predetermined receiving terminal can be an IP address, an account or an ID, wherein the ID can be a mobile phone number, i.e., the user can specify the information of the predetermined receiving terminal in advance.

According to actual application scenarios, the predetermined receiving terminal can be the same as the terminal for sending the post request, or can be different from the terminal for sending the post request. In the exemplary embodiments of the present disclosure, the user can book tickets by a computer, and set the predetermined receiving terminal as this computer or other computers located in the same local area network as this computer, such as computers in other rooms. Similarly, those skilled in the art can contemplate that this method is also appropriate for a local area network, such as an office local area network. However, if for example, the user books tickets by using his home computer , but the user cannot stay in front of the computer in a future time period; for instance, the user has booked tickets by the computer after waking up in the morning, and then the user goes to work, when the user sends the post instruction through the computer, he can specify his mobile phone as the receiving terminal, such that the user can receive the pushing message by his mobile phone once the booking is successful when going to work; or when the user sends the post instruction through the computer, he sends an e-mail to a mailbox specified by the user, such that the user can obtain the pushing message by checking his e-mail after reaching work; or when the user is on the way to work, the pushing message can be sent in the form of webpage pop-up window to the user once the booking is successful. In addition, when the user implements ticket booking for many people, he can specify these people's mobile phones as the predetermined receiving terminal in the post instruction, and after the ticket booking is successful, the pushing message can be sent to the mobile phones of those people.

Step S57 is not limited to be after step S56. It can be implemented at any time after obtaining the post instruction and before step S58.

In step S58, a prompt pushing message is generated in accordance with the return message.

In step S59, the prompt pushing message is sent to at least one predetermined receiving terminal.

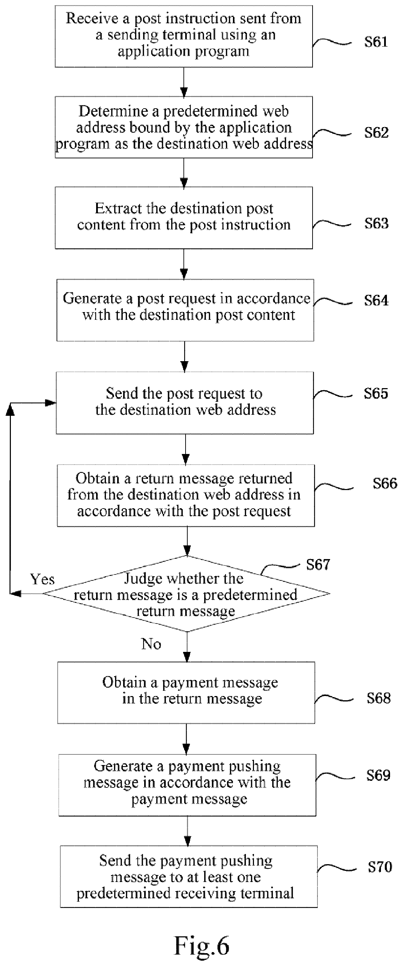

Fig. 6 is a flow chart of a method for router access control according to an exemplary embodiment. As shown in Fig. 6, the method for router access control is applied to the router, and includes the following steps.

In step S61, a post instruction sent by a sending terminal is received using an application program.

The post instruction includes at least the destination post content.

In the exemplary embodiments of the present disclosure, one or more application programs, such as an app, may be built in the router. Each of the application programs is bound with a predetermined web address. For example, for the train ticket booking website, an app for booking train tickets can be installed individually; moreover, for the Taobao website, an app for shopping on Taobao can be installed individually. In this case, when the user needs a service, he can input the post instruction by using the specific app.

In step S62, a predetermined web address bound by the application program is determined as the destination web address.

Because each application program is bound with one predetermined web address, when receiving the post instruction by a certain application program, the predetermined web address bound by the application program can be determined as the destination web address.

In step S63, the destination post content is extracted from the post instruction.

In step S64, a post request is generated in accordance with the destination post content.

In step S65, the post request is sent to the destination web address.

In step S66, a return message returned by the destination web address in accordance with the post request is obtained.

In step S67, whether the return message is a predetermined return message is judged.

When the return message is not the predetermined return message, the process returns back to step S65 to continue to send the post request to the destination web address until the return message is the predetermined return message.

When the return message is the predetermined return message, in step S68, a payment information in the return message is obtained.

In step S69, a payment pushing message is generated in accordance with the return message.

In step S70, the payment pushing message is sent to at least one predetermined receiving terminal.

By building different application programs in the router, the user can directly access a certain application program in the router, and directly input the post instruction including at least the post content according to an input interface provided by the application program without the procedure of inputting the destination web address, which can facilitate sending the post request quickly, especially for those users, who usually open the destination web address by the portal websites but are unfamiliar with a detailed spelling of the web address.

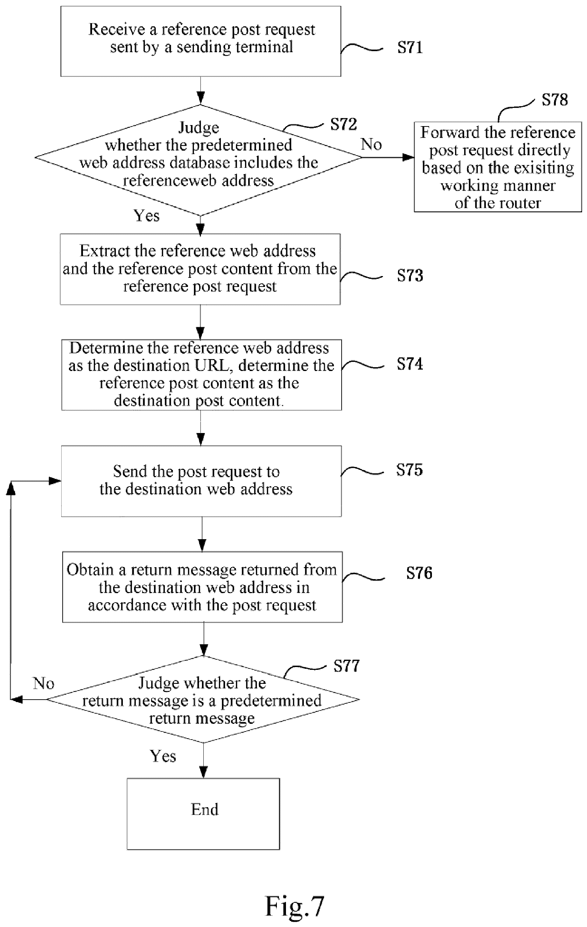

Fig. 7 is a flow chart of a method for router access control according to an exemplary embodiment. As shown in Fig. 7, the method for router access control is applied to the router, and includes the following steps.

In step S71, a reference post request sent by a sending terminal is received.

The user can access a destination website directly by a browser on the sending terminal, and fill a post content in the destination website, then the browser directly generates a reference post request, and sends the reference post request to the router. The reference post request includes at least a reference web address and a reference post content. Furthermore, the reference post request can include information of a predetermined receiving terminal.

In step S72, whether a predetermined web address database includes the reference web address is determined.

The web address database is provided in the router in advance. It may be defaulted that the web address database stores web addresses corresponding to the usual shopping and booking websites, or stores web addresses inputted by the user in advance.

When the predetermined web address database includes the reference web address, in step S73, the reference web address and the reference post content are extracted from the reference post request. In addition, extracting the reference web address from the reference post request may also be implemented after step S71 and before step S72.

In step S74, the reference web address is determined as the destination web address, and the reference post content is determined as the destination post content.

When the predetermined web address database does not include the reference web address, in step S78, the reference post request is forwarded directly based on the current working mode of the router.

In step S75, the reference post request is sent to the destination web address.

In this step, the reference post request, as the post request to be sent, is sent to the destination web address directly.

In step S76, a return message returned by the destination web address in accordance with the reference post request is obtained.

In step S77, whether the return message is a predetermined return message is judged.

When the return message is not the predetermined message, the process returns back to step S75 to continue to send the reference post request to the destination web address, until the return message is the predetermined return message; and when the return message is the predetermined return message, the process ends.

The exemplary embodiments of the present disclosure are equivalent to build a plug-in component for accelerating many of specific web addresses in the router. Many of the specific web addresses refer to the web addresses provided in the predetermined web address database. Therefore, when the user needs to send many post requests to many destination web addresses, he may directly perform operations on the browser of the terminal without looking for the corresponding application programs in the router and inputting the post instruction individually in the different applications programs. After the browser sends the different post requests to the router, the router, according to the reference post request sent by the terminal, can selectively and automatically send the post request many times until the return message is the predetermined message, or can selectively and directly perform the retransmission, thereby decreasing the complexity of user operations significantly.

With regard to any of the exemplary embodiments of the present disclosure shown in Fig. 1, Fig. 3, Fig. 4, Fig. 5, Fig. 6 and Fig. 7, in the procedure of obtaining a network resource, the user only needs to send the destination web address and the destination post content once to the router through the terminal, and interactions among all the remaining data are totally implemented between the router and the server corresponding to the destination web address. In comparison with the related art, the method of the present disclosure does not need to forward the return message of the post request to the user by the router and send the post request again by the user after operations every time, which reduces the number of interactions between the router and the terminal, and further decreases the time consumed for the procedure of obtaining network resources, such that an interval of two adjacent post requests sent by the router is reduced, the number of sending post requests through the router per unit time is increased, and a success rate of obtaining the finite network resource is significantly improved.

Moreover, in the exemplary embodiments of the present disclosure shown in Fig. 1, Fig. 3, Fig. 4, Fig. 5, Fig. 6 and Fig. 7, the same steps in different exemplary embodiments can be referred to each other, and the different steps in different exemplary embodiments can be combined with each other.

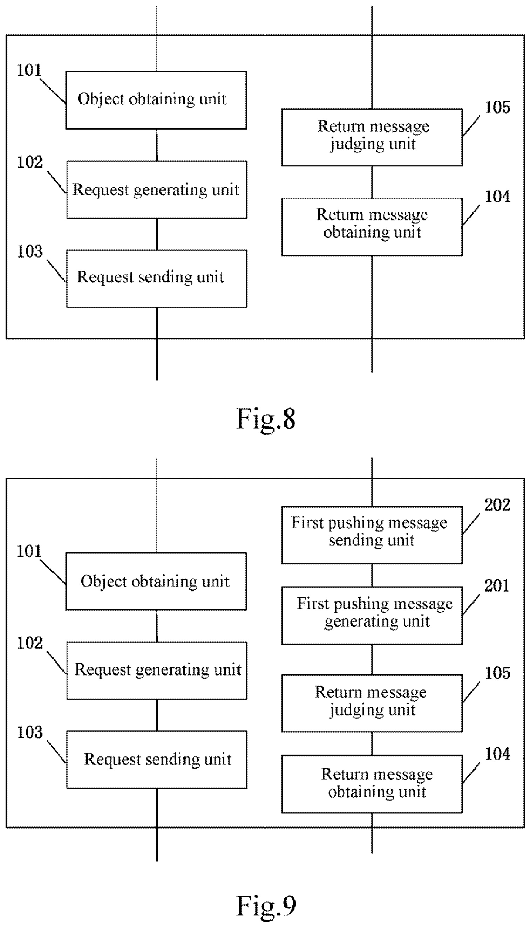

Fig. 8 is a block diagram of a device for router access control according to an exemplary embodiment. As shown in Fig. 8, the device includes an object obtaining unit 101, a request generating unit 102, a request sending unit 103, a return message obtaining unit 104, and a return message judging unit 105.

The object obtaining unit 101 is configured to obtain a destination web address and a destination post content.

In one exemplary embodiment of the present disclosure, the object obtaining unit 101 can include a first instruction receiving unit and an object extracting unit, wherein, the first instruction receiving unit is configured to receive a post instruction sent by a sending terminal, or inputted by an input device that is connected to the router, the post instruction including at least the destination web address and the destination post content; and the object extracting unit is configured to extract the destination web address and the destination post content from the post instruction.

In one exemplary embodiment of the present disclosure, the object obtaining unit 101 can include a second instruction receiving unit, a destination web address determining unit and a destination post content extracting unit, wherein, the second instruction receiving unit is configured to receive the post instruction sent by the sending terminal via an application program, the post instruction including at least the destination post content; the application program is bound with a predetermined web address; the destination web address determining unit is configured to determine the predetermined web address bounded by the application program as the destination web address; and the destination post content extracting unit is configured to extract the destination post content from the post instruction.

In one exemplary embodiment of the present disclosure, the object obtaining unit 101 can include a request receiving unit, a web address judging unit, a reference object extracting unit, and a destination object determining unit, wherein, the request receiving unit is configured to receive the reference post request sent by the sending terminal, the reference post request including at least the reference web address and the reference post content; the web address judging unit is configured to judge whether a predetermined web address database includes the reference web address; the reference object extracting unit is configured to extract the reference web address and the reference post content from the reference post request if the predetermined web address database includes the reference web address; and the destination object determining unit is configured to determine the reference web address as the destination web address, and to determine the reference post content as the destination post content.

The request generating unit 102 is configured to generate a post request in accordance with the destination post content.

The request sending unit 103 is configured to send the post request to the destination web address.

The return message obtaining unit 104 is configured to obtain a return message returned by the destination web address in accordance with the post request.

The return message judging unit 105 is configured to judge whether the return message is a predetermined return message.

If the return message is not the predetermined return message, the request sending unit 103 is further configured to continue to send the post request to the destination web address, until the return message is the predetermined return message.

Fig. 9 is a block diagram of a device for router access control according to an exemplary embodiment. Referring to Fig. 9, based on the exemplary embodiment shown in Fig. 8, the device further includes a first pushing message generating unit 201 and a first pushing message sending unit 202.

The first pushing message generating unit 201 is configured to generate a prompt pushing message in accordance with the return message if the return message is the predetermined return message.

The first pushing message sending unit 202 is configured to send the prompt pushing message to at least one predetermined receiving terminal.

In the exemplary embodiments of the present disclosure, sending the pushing message to the predetermined receiving terminal is performed in a format including one of a text message, a mail, a webpage message, an Internet pushing message, and a LAN notification message, or a combination thereof It can be seen that the predetermined receiving terminal can be a mobile terminal, a computer, or other network terminals.

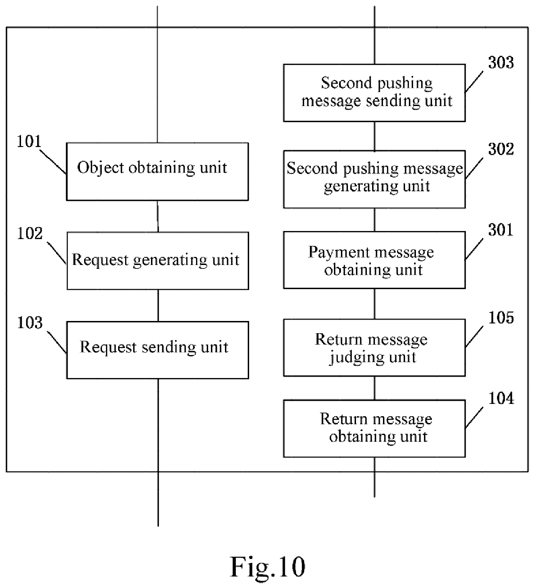

Fig. 10 is a block diagram of a device for router access control according to an exemplary embodiment. Referring to Fig. 10, based on the exemplary embodiment shown in Fig. 8, the device further includes a payment information obtaining unit 301, a second pushing message generating unit 302 and a second pushing message sending unit 303.

The payment information obtaining unit 301 is configured to obtain a payment information in the return message if the return message is the predetermined return message.

The second pushing message generating unit 302 is configured to generate a payment pushing message in accordance with the payment information.

The second pushing message sending unit 303 is configured to send the payment pushing message to at least one predetermined receiving terminal.

Additionally, when the post instruction or the reference post request includes information of the predetermined receiving terminal for receiving the pushing message, the device may further include a terminal information extracting unit.

The terminal information extracting unit is configured to extract the information of the predetermined receiving terminal from the post instruction or the reference post request.

According to the actual application scenes, the information of the predetermined receiving terminal can be the same as the terminal for sending the post request. Also, it can be different from the terminal sending the post request.

With respect to the devices in the above embodiments, the specific manners for performing operations for individual modules therein have been described in detail in the embodiments regarding the methods, which will not be elaborated herein.

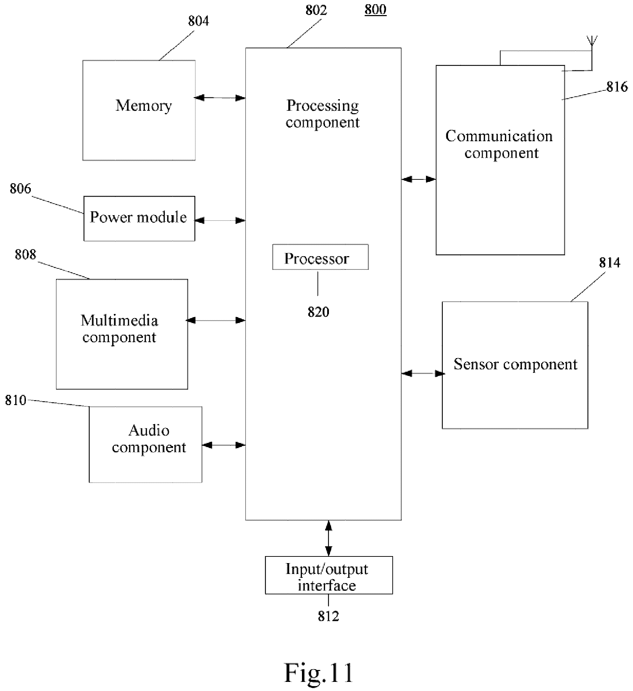

Fig. 11 is a block diagram of an electronic device 800 for controlling the router access according to an exemplary embodiment. For instance, the electronic device 800 may be a mobile phone, a computer, a digital broadcast terminal, a messaging device, a gaming console, a tablet, a medical device, exercise equipment, a personal digital assistant, a router, etc. Except for the router described above, other devices can combine with the function of router, and the like.

Referring to Fig. 11, the electronic device 800 may include one or more of the following components: a processing module 802, a memory 804, a power component 806, a multimedia component 808, an audio component 810, an input/output (I/O) interface 812, a sensor component 814, and a communication component 816.

The processing component 802 typically controls overall operations of the electronic device 800, such as the operations associated with display, telephone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and processing component 802.

The memory 804 is configured to store various types of data to support the operation of the device 800. Examples of such data include instructions for any applications or methods operated on the electronic device 800, contact data, phonebook data, messages, pictures, video, etc. the memory 804 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the electronic device 800. The power component 806 may include a power management system, one or more power sources, and any other components associated with the generation, management and distribution of power in the electronic device 800.

The multimedia component 808 includes a screen providing an output interface between the electronic device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the electronic device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the electronic device 800. For instance, the sensor component 814 may detect an open/closed status of the electronic device 800, relative positioning of components, e.g., the display and the keypad, of the electronic device 800, a change in position of the electronic device 800 or a component of the electronic device 800, a presence or absence of user contact with the electronic device 800, an orientation or an acceleration/deceleration of the device 800, and a change in temperature of the electronic device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the electronic device 800 and other devices. The electronic device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the electronic device 800, for performing the above-described methods. For example, the non-transitory computer-readable storage medium may be a ROM, a RAM, a CD-ROM, a magnetic tape, a floppy disc, an optical data storage device, and the like.

The non-temporary computer readable storage medium can enable the mobile terminal to perform the method for router access control when instructions in the storage medium are executed by a processor of the mobile terminal. The method includes:
obtaining a destination web address and a destination post content;
generating a post request in accordance with the destination post content;
sending the post request to the destination web address;
obtaining a return message returned by the destination web address in accordance with the post request;
judging whether the return message is a predetermined return message; and
if the return message is not the predetermined return message, continuing to send the post request to the destination web address until the return message is the predetermined return message.

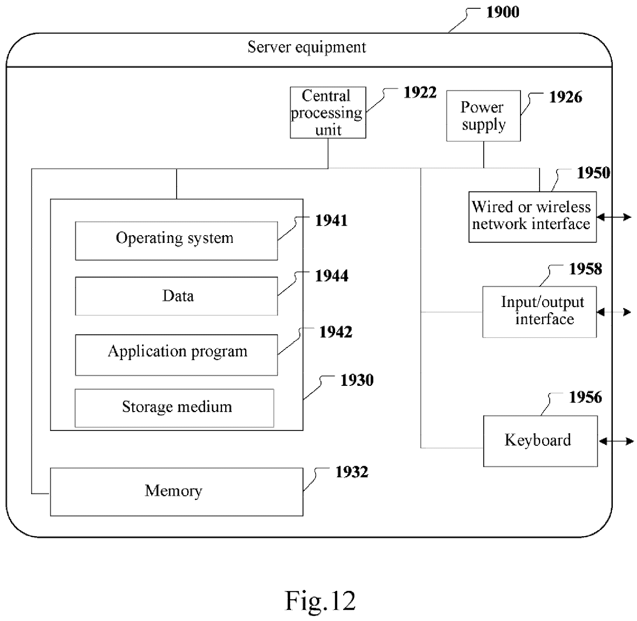

Fig. 12 is a block diagram of a server according to an exemplary embodiment. The server 1900 may have large differences due to distinct configurations or performances, and may include one or more central processing units (CPU) 1922 (such as one or more processors) and a memory 1932, and one or more storage mediums 1930 (such as one or more mass memory devices) storing application programs 1942 or data 1944. The memory 1932 and the storage mediums 1930 can be a transient or persistent storage. The programs stored in the storage mediums 1930 may include one or more modules (not marked in the drawing). Each of modules may include a series of instruction operations to the server. Furthermore, the central processing units 1922 may be arranged to communicate with the storage mediums 1930 to execute a series of instruction operations in the storage mediums 1930 on the server.

The server 1900 may also include one or more power supplies 1926, one or more wired or wireless network interfaces 1950, one or more input/output interfaces 1958, one or more keyboards 1956, and/or one or more operating systems 1941, such as Windows ServerTM, Mac OS XTM, UnixTM, LinuxTM, FreeBSDTM, or the like.

The non-temporary computer readable storage medium can enable the server to perform the method of virtually operating a document when the instructions in the storage medium are executed by a processor of the server. The method includes:
obtaining a destination web address and a destination post content;
generating a post request in accordance with the destination post content;
sending the post request to the destination web address;
obtaining a return message returned by the destination web address in accordance with the post request.
judging whether the return message is a predetermined return message; and
if the return message is not the predetermined return message, continuing to send the post request to the destination web address until the return message is the predetermined return message.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for accessing a network resource comprising a user performing operations of filling in forms and registration with content information in a browser on a user terminal, submitting a post request to a destination web address containing the content information to request the resource, through a router, the method comprises:
the router obtaining (S11) once from the browser, the destination web address and the content information;
the router generating (S12) the post request in accordance with the content information;
the router sending (S13) the post request to the destination web address;
the router obtaining (S14) a return message returned from the destination web address in accordance with the post request;
the router judging (S15) whether the return message is a predetermined return message of the network resource obtaining procedure;
if the return message is not the predetermined return message, the router continuing to re-send (S13) the post request to the destination web address until the return message is the predetermined return message; and
if the return message is the predetermined return message, generating (S31) a prompt message in accordance with the return message; and
sending (S32) the prompt message to at least one predetermined receiving user terminal.

2. The method according to claim 1, wherein the method further comprises:
if the return message is the predetermined return message, obtaining (S41) a payment information in the return message;
the router generating (S42) a payment message in accordance with the payment information; and
the router sending (S43) the payment message to at least one predetermined receiving user terminal.

3. The method according to claim 2, wherein the router sending (S32) the message to the predetermined receiving user terminal is performed in a format comprising: one of a text message, a mail, a webpage message, an Internet message, and a LAN notification message, or a combination thereof.

4. The method according to claim 1, wherein the router obtaining (S11) the destination web address and the content information comprises:
the router receiving (S51) a post instruction sent from a sending user terminal, or inputted from an input device that is connected to the router, the post instruction comprising at least the destination web address and the content information; and
the router extracting (S52) the destination web address and the content information from the post instruction.

5. The method according to claim 1, wherein the router obtaining (S11) the destination web address and the content information comprises:
the router receiving (S61) a post instruction sent from a sending user terminal using the browser, or inputted from an input device that is connected to the router, the post instruction comprising at least the content information, the application program being bound with a predetermined web address;
the router determining (S62) the predetermined web address bound by the application program as the destination web address; and
the router extracting (S63) the content information from the post instruction.

6. The method according to claim 1, wherein the router obtaining (S11) the destination web address and the content information comprises:
the router receiving (S71) a particular post request sent from a sending user terminal, the particular post request comprising at least a particular web address and a particular post content;
the router judging (S72) whether a predetermined web address database comprises the particular web address;
if the predetermined web address database comprises the particular web address, the router extracting (S73) the particular web address and the particular content from the particular post request; and
the router determining (S74) the particular web address as the destination web address, and determining the particular content as the content information.

7. A router for accessing a network resource, the router comprises:
an object obtaining unit (101) configured to obtain (S11) once from a browser on a user terminal, or inputted from an input device that is connected to the router, a destination web address and content information to be submitted to the destination web address through a post request by the user terminal;
a request generating unit (102) configured to generate (S12) a post request in accordance with the content information;
a request sending unit (103) configured to send (S13) the post request to the destination web address;
a return message obtaining unit (104) configured to obtain (S14) a return message returned from the destination web address in accordance with the post request; and
a message judging unit (105) configured to judge (S15) whether the return message is a predetermined return message of the network resource obtaining procedure,
wherein if the return message is not the predetermined return message, the request sending unit is configured to continue to send (S13) the post request to the destination web address until the return message is the predetermined return message;
a first message generating unit (201) configured to generate (S31) a prompt message in accordance with the return message if the return message is the predetermined return message; and
a first message sending unit (202) configured to send (S32) the prompt message to at least one predetermined receiving user terminal.

8. The router according to claim 7, wherein the device further comprises:
a payment information obtaining unit (301) configured to obtain (S41) a payment information in the return message if the return message is the predetermined return message;
a second message generating unit (302) configured to generate (S42) a payment message in accordance with the payment information; and
a second message sending unit (303) configured to send (S43) the payment message to at least one predetermined receiving user terminal.

9. The router according to claim 7, wherein the object obtaining unit (101) comprises:
a first instruction receiving unit configured to receive (S51) a post instruction sent from a sending user terminal using the browser, or inputted from an input device that is connected to the router, the post instruction comprising at least the destination web address and the content information; and
an object extracting unit configured to extract (S52) the destination web address and the content information from the post instruction.

10. The router according to claim 7, wherein the object obtaining unit (101) comprises:
a second instruction receiving unit configured to receive (S61) a post instruction sent from a sending user terminal using the browser, or inputted from an input device that is connected to the router, the post instruction comprising at least the content information, the application program being bound with a predetermined web address;
a destination web address determining unit configured to determine (S62) the predetermined web address bound by the application program as the destination web address; and
a content information extracting unit configured to extract (S63) the content information from the post instruction.

11. The router according to claim 7, wherein the object obtaining unit (101) comprises:
a request receiving unit configured to receive (S71) a particular post request sent from a sending user terminal using the browser, or inputted from an input device that is connected to the router, the particular post request comprising at least a particular web address and a particular post content;
a web address judging unit configured to determine (S72) whether a predetermined web address database comprises the particular web address;
a particular object extracting unit configured to extract (S73) the particular web address and the particular content from the particular post request if the predetermined web address database comprises the particular web address; and
a destination object determining unit configured to determine (S74) the particular web address as the destination web address, and determine the particular content as the content information.

12. A computer program, which when executing on a processor of a router, performs a method according to any one of claims 1 to 6.

## Patentansprüche

1. Verfahren zum Zugreifen auf eine Netzwerkressource, umfassend, dass ein Benutzer Vorgänge zum Ausfüllen von Formularen und Registrieren mit Inhaltsinformationen in einem Browser auf einem Benutzerendgerät ausführt, eine Post-Anfrage an eine Ziel-Webadresse übermittelt, die die Inhaltsinformationen enthält, um die Ressource über einen Router anzufragen, wobei das Verfahren umfasst, dass:
der Router von dem Browser einmal die Ziel-Webadresse und die Inhaltsinformationen erhält (S11);
der Router die Post-Anfrage entsprechend den Inhaltsinformationen erzeugt (S12);
der Router die Post-Anfrage an die Ziel-Webadresse sendet (S13);
der Router eine von der Zielwebadresse entsprechend der Post-Anfrage zurückgesendete Rückmeldung erhält (S14);
der Router beurteilt (S15), ob es sich bei der Rückmeldung um eine vorab festgelegte Rückmeldung des Vorgangs zum Erhalten der Netzwerkressource handelt;
wenn es sich bei der Rückmeldung nicht um die vorab festgelegte Rückmeldung handelt, der Router die Post-Anfrage dauerhaft neu an die Ziel-Web-Adresse sendet (S13), bis es sich bei der Rückmeldung um die vorab festgelegte Rückmeldung handelt; und
wenn es sich bei der Rückmeldung um die vorab festgelegte Rückmeldung handelt, eine direkte Benachrichtigung entsprechend der Rückmeldung erzeugt (S31); und
die direkte Benachrichtigung an mindestens ein vorab festgelegtes empfangendes Benutzerendgerät sendet (S32).

2. Verfahren nach Anspruch 1, wobei das Verfahren ferner umfasst, dass:
wenn es sich bei der Rückmeldung um die vorab festgelegte Rückmeldung handelt, eine Zahlungsinformation in der Rückmeldung erhalten (S41) wird;
der Roter eine Zahlungsbenachrichtigung entsprechend der Zahlungsinformation erzeugt (S42); und
der Router die Zahlungsbenachrichtigung an mindestens ein vorab festgelegtes empfangendes Benutzerendgerät sendet (S43).

3. Verfahren nach Anspruch 2, wobei das Senden (S32) der Benachrichtigung an das vorab festgelegte empfangende Benutzerendgerät durch den Router in einem Format durchgeführt wird, das Folgendes umfasst: eines von einer Textnachricht, einer Mail, einer Webseitennachricht, einer Internetnachricht und einer LAN-Benachrichtigungsnachricht oder eine Kombination daraus.

4. Verfahren nach Anspruch 1, wobei das Erhalten (S11) der Zielwebadresse und der Inhaltsinformationen durch den Router umfasst, dass:
der Router eine Post-Anweisung empfängt (S51), die von einem sendenden Benutzerendgerät gesendet wird oder von einer mit dem Router verbundenen Eingabevorrichtung eingegeben wird, wobei die Post-Anweisung mindestens eine Zielwebadresse und die Inhaltsinformationen umfasst; und
der Router die Zielwebadresse und die Inhaltsinformationen aus der Post-Anweisung extrahiert (S52).

5. Verfahren nach Anspruch 1, wobei das Erhalten (S11) der Zielwebadresse und der Inhaltsinformationen umfasst, dass:
der Router eine Post-Anweisung empfängt (S61), die von einem sendenden Benutzerendgerät unter Verwendung des Browsers gesendet wird oder von einer mit dem Router verbundenen Eingabevorrichtung eingegeben wird, wobei die Post-Anweisung mindestens die Inhaltsinformationen umfasst, wobei das Anwendungsprogramm an eine vorab festgelegte Webadresse gebunden ist;
der Router die vorab festgelegte Webadresse bestimmt (S62), die durch das Anwendungsprogramm als Zielwebadresse angebunden ist; und
der Router die Inhaltsinformationen von der Post-Anweisung extrahiert (S63).

6. Verfahren nach Anspruch 1, wobei das Erhalten (S11) der Zielwebadresse und der Inhaltsinformationen durch den Router umfasst, dass:
der Router eine konkrete Post-Anfrage, die von einem sendenden Benutzerendgerät gesendet wurde, empfängt (S71), wobei die konkrete Post-Anfrage mindestens eine konkrete Webadresse und einen konkreten Post-Inhalt umfasst;
der Router beurteilt (S72), ob eine vorab festgelegte Webadressdatenbank die konkrete Webadresse umfasst;
wenn die vorab festgelegte Webadressdatenbank die konkrete Webadresse umfasst, der Router die konkrete Webadresse und den konkreten Inhalt aus der konkreten Post-Anfrage extrahiert (S73); und
der Router die konkrete Webadresse als Zielwebadresse bestimmt (S74) und den konkreten Inhalt als Inhaltsinformationen bestimmt.

7. Router zum Zugreifen auf eine Netzwerkressource, wobei der Router Folgendes umfasst:
eine Objekterhalteinheit (101), die dazu konfiguriert ist, von einem Browser auf einem Benutzerendgerät oder von einer mit dem Router verbundenen Eingabevorrichtung eingegeben, einmal eine Zielwebadresse und Inhaltsinformationen zu erhalten (S11), die über eine Post-Anfrage von dem Benutzerendgerät an die Zielwebadresse übermittelt werden sollen;
eine Anfrageerzeugungseinheit (102), die dazu konfiguriert ist, eine Post-Anfrage entsprechend den Inhaltsinformationen zu erzeugen (S12);
eine Anfragesendeeinheit (103), die dazu konfiguriert ist, die Post-Anfrage an die Zielwebadresse zu senden (S13);
eine Rückmeldungserhalteinheit (104), die dazu konfiguriert ist, eine von der Zielwebadresse entsprechend der Post-Anfrage zurückgesendete Rückmeldung zu erhalten (S14); und
eine Nachrichtenbeurteilungseinheit (105), die dazu konfiguriert ist, zu beurteilen (S15), ob es sich bei der Rückmeldung um eine vorab festgelegte Rückmeldung des Vorgangs zum Erhalten der Netzwerkressource handelt, wobei, wenn es sich bei der Rückmeldung nicht um die vorab festgelegte Rückmeldung handelt, die Anfragesendeeinheit dazu konfiguriert ist, die Post-Anfrage dauerhaft an die Zielwebadresse zu senden (S13), bis es sich bei der Rückmeldung um die vorab festgelegte Rückmeldung handelt;
eine erste Nachrichtenerzeugungseinheit (201), die dazu konfiguriert ist, eine unmittelbare Nachricht entsprechend der Rückmeldung zu erzeugen (S31), wenn es sich bei der Rückmeldung um die vorab festgelegte Rückmeldung handelt; und
eine erste Nachrichtensendeeinheit (202), die dazu konfiguriert ist, die unmittelbare Nachricht an mindestens ein vorab festgelegtes empfangendes Benutzerendgerät zu senden (S32).

8. Router nach Anspruch 7, wobei die Vorrichtung ferner Folgendes umfasst:
eine Zahlungsinformationserhalteinheit (301), die dazu konfiguriert ist, eine Zahlungsinformation in der Rückmeldung zu erhalten (S41), wenn es sich bei der Rückmeldung um die vorab festgelegte Rückmeldung handelt;
eine zweite Nachrichtenerzeugungseinheit (302), die dazu konfiguriert ist, eine Zahlungsnachricht entsprechend den Zahlungsinformationen zu erzeugen (S42); und
eine zweite Nachrichtensendeeinheit (303), die dazu konfiguriert ist, die Zahlungsnachricht an mindestens ein vorab festgelegtes empfangendes Benutzerendgerät zu senden (S43).

9. Router nach Anspruch 7, wobei die Objekterhalteinheit (101) Folgendes umfasst:
eine erste Anweisungsempfangseinheit, die dazu konfiguriert ist, eine Post-Anweisung, die von einem sendenden Benutzerendgerät unter Verwendung des Browsers gesendet wird oder von einer mit dem Router verbundenen Eingabevorrichtung eingegeben wird, zu empfangen (S51), wobei die Post-Anweisung mindestens die Zielwebadresse und die Inhaltsinformationen umfasst; und
eine Objektextraktionseinheit, die dazu konfiguriert ist, die Zielwebadresse und die Inhaltsinformationen aus der Post-Anweisung zu extrahieren (S52).

10. Router nach Anspruch 7, wobei die Objekterhalteinheit (101) Folgendes umfasst:
eine zweite Anweisungsempfangseinheit, die dazu konfiguriert ist, eine Post-Anwendung, die von einem sendenden Benutzerendgerät unter Verwendung des Browsers gesendet wird oder von einer mit dem Router verbundenen Eingabevorrichtung eingegeben wird, zu empfangen (S61), wobei die Post-Anweisung mindestens die Inhaltsinformationen umfasst, wobei das Anwendungsprogramm an eine vorab festgelegte Webadresse gebunden ist;
eine Zielwebadressbestimmungseinheit, die dazu konfiguriert ist, die durch das Anwendungsprogramm als Zielwebadresse angebundene vorab festgelegte Webadresse zu bestimmen (S62); und
eine Inhaltsinformationsextraktionseinheit, die dazu konfiguriert ist, die Inhaltsinformationen aus der Post-Anweisung zu extrahieren (S63).

11. Router nach Anspruch 7, wobei die Objekterhalteinheit (101) Folgendes umfasst:
eine Anfrageempfangseinheit, die dazu konfiguriert ist, eine konkrete Post-Anfrage, die von einem sendenden Benutzerendgerät unter Verwendung des Browsers gesendet wird oder von einer mit dem Router verbundenen Eingabevorrichtung eingegeben wird, zu empfangen (S71), wobei die konkrete Post-Anfrage mindestens eine konkrete Webadresse und einen konkreten Post-Inhalt umfasst;
eine Webadressenbeurteilungseinheit, die dazu konfiguriert ist, zu bestimmen (S72), ob eine vorab festgelegte Webadressdatenbank die konkrete Webadresse umfasst;
eine konkrete Objektextraktionseinheit, die dazu konfiguriert ist, die konkrete Webadresse und den konkreten Inhalt aus der konkreten Post-Anfrage zu extrahieren (S73), wenn die vorab festgelegte Webadressdatenbank die konkrete Webadresse umfasst; und
eine Zielobjektbestimmungseinheit, die dazu konfiguriert ist, die konkrete Webadresse als Zielwebadresse zu bestimmen (S74) und den konkreten Inhalt als Inhaltsinformationen zu bestimmen.

12. Computerprogramm, das, wenn es auf einem Prozessor eines Routers abläuft, ein Verfahren nach einem der Ansprüche 1 bis 6 ausführt.

## Revendications

1. Procédé d'accès à une ressource réseau comprenant la réalisation par un utilisateur d'opérations de remplissage de formulaires et d'enregistrement avec des informations de contenu dans un navigateur sur un terminal utilisateur, le fait de soumettre une demande de publication à une adresse web de destination contenant les informations de contenu pour demander la ressource, par l'intermédiaire d'un routeur, le procédé comprend :
l'obtention (S11) par le routeur une fois auprès du navigateur, de l'adresse web de destination et des informations du contenu ;
la génération (S12) par le routeur de la demande de publication conformément aux informations du contenu ;
l'envoi (S13) par le routeur de la demande de publication à l'adresse web de destination ;
l'obtention (S14) par le routeur d'un message de renvoi renvoyé depuis l'adresse web de destination conformément à la demande de publication ;
l'estimation (S15) par le routeur permettant de savoir si le message de renvoi est un message de renvoi prédéterminé de la procédure d'obtention de ressource réseau ;
si le message de renvoi n'est pas le message de renvoi prédéterminé, la poursuite par le routeur de ré-envoi (S13) de la demande de publication à l'adresse web de destination jusqu'à ce que le message de renvoi soit le message de renvoi prédéterminé ; et
si le message de renvoi est le message de renvoi prédéterminé, la génération (S31) d'un message d'invite conformément au message de renvoi ; et
l'envoi (S32) du message d'invite à au moins un terminal utilisateur de réception prédéterminé.

2. Procédé selon la revendication 1, dans lequel le procédé comprend en outre :
si le message de renvoi est le message de renvoi prédéterminé, l'obtention (S41) d'informations de paiement dans le message de renvoi ;
la génération (S42) par le routeur d'un message de paiement conformément aux informations de paiement ; et
l'envoi (S43) par le routeur du message de paiement à au moins un terminal utilisateur de réception prédéterminé.

3. Procédé selon la revendication 2, dans lequel l'envoi (S32) par le routeur du message au terminal utilisateur de réception prédéterminé est réalisé dans un format comprenant : l'un d'un message texte, d'un courriel, d'un message de page web, d'un message Internet, et d'un message de notification LAN, ou une combinaison de ceux-ci.

4. Procédé selon la revendication 1, dans lequel l'obtention (S11) par le routeur de l'adresse web de destination et des informations de contenu comprend :
la réception (S51) par le routeur d'une instruction de publication envoyée depuis un terminal utilisateur d'envoi, ou entrée depuis un dispositif d'entrée qui est connecté au routeur, l'instruction de publication comprenant au moins l'adresse web de destination et les informations de contenu ; et
l'extraction (S52) par le routeur de l'adresse web de destination et des informations de contenu depuis l'instruction de publication.

5. Procédé selon la revendication 1, dans lequel l'obtention (S11) par le routeur de l'adresse web de destination et des informations de contenu comprend :
la réception (S61) par le routeur de l'instruction de publication envoyée depuis un terminal utilisateur d'envoi à l'aide du navigateur, ou entrée depuis un dispositif d'entrée qui est connecté au routeur, l'instruction de publication comprenant au moins les informations du contenu, le programme d'application étant lié à une adresse web prédéterminée ;
la détermination (S62) par le routeur de l'adresse web prédéterminée liée par le programme d'application en tant qu'adresse web de destination ; et
l'extraction (S63) par le routeur des informations de contenu depuis l'instruction de publication.

6. Procédé selon la revendication 1, dans lequel l'obtention (S11) par le routeur de l'adresse web de destination et des informations de contenu comprend :
la réception (S71) par le routeur d'une demande de publication particulière envoyée depuis un terminal utilisateur d'envoi, la demande de publication particulière comprenant au moins une adresse web particulière et un contenu de publication particulier ;
l'estimation (S72) par le routeur permettant de savoir si une base de données d'adresses web prédéterminées comprend l'adresse web particulière ;
si la base de données d'adresse web prédéterminée comprend l'adresse web particulière, l'extraction (S73) par le routeur de l'adresse web particulière et du contenu particulier depuis la demande de publication particulière ; et
la détermination (S74) par le routeur de l'adresse web particulière en tant qu'adresse web de destination, et la détermination du contenu particulier en tant qu'informations de contenu.

7. Routeur d'accès à une ressource réseau, le routeur comprend :
une unité d'obtention d'objet (101) configurée pour obtenir (S11) une fois depuis un navigateur sur le terminal utilisateur, ou entrée depuis un dispositif d'entrée qui est connecté au routeur, une adresse web de destination et des informations de contenu à soumettre à l'adresse web de destination par l'intermédiaire d'une demande de publication par le terminal utilisateur ;
une unité de génération de demande (102) configurée pour générer (S12) une demande de publication conformément aux informations de contenu ;
une unité d'envoi de demande (103) configurée pour envoyer (S13) la demande de publication à l'adresse web de destination ;
une unité d'obtention de message de renvoi (104) configurée pour obtenir (S14) un message de renvoi renvoyé depuis l'adresse web de destination conformément à la demande de publication ; et
une unité d'estimation de message (105) configurée pour estimer (S15) si le message de renvoi est un message de renvoi prédéterminé de la procédure d'obtention de ressource réseau, dans lequel si le message de renvoi n'est pas le message de renvoi prédéterminé, l'unité d'envoi de demande est configurée pour poursuivre l'envoi (S13) de la demande de publication à l'adresse web de destination jusqu'à ce que le message de renvoi soit le message de renvoi prédéterminé ;
une première unité de génération de message (201) configurée pour générer (S31) un message d'invite conformément au message de renvoi si le message de renvoi est le message de renvoi prédéterminé ; et
une première unité d'envoi de message (202) configurée pour envoyer (S32) le message d'invite à au moins un terminal utilisateur de réception prédéterminé.

8. Routeur selon la revendication 7, dans lequel le dispositif comprend en outre :
une unité d'obtention d'informations de paiement (301) configurée pour obtenir (S41) des informations de paiement dans le message de renvoi si le message de renvoi est le message de renvoi prédéterminé ;
une seconde unité de génération de message (302) configurée pour générer (S42) un message de paiement conformément aux informations de paiement ; et
une seconde unité d'envoi de message (303) configurée pour envoyer (S43) le message de paiement à l'au moins un terminal utilisateur de réception prédéterminé.

9. Routeur selon la revendication 7, dans lequel l'unité d'obtention d'objet (101) comprend :
une première unité de réception d'instructions configurée pour recevoir (S51) une instruction de publication envoyée depuis un terminal utilisateur d'envoi à l'aide du navigateur, ou entrée depuis un dispositif d'entrée qui est connecté au routeur, l'instruction de publication comprenant au moins l'adresse web de destination et les informations de contenu ; et
une unité d'extraction d'objet configurée pour extraire (S52) l'adresse web de destination et les informations de contenu depuis l'instruction de publication.

10. Routeur selon la revendication 7, dans lequel l'unité d'obtention d'objet (101) comprend :
une seconde unité de réception d'instruction configurée pour recevoir (S61) une instruction de publication envoyée depuis un terminal utilisateur d'envoi à l'aide du navigateur, ou entrée depuis un dispositif d'entrée qui est connecté au routeur, l'instruction de publication comprenant au moins les informations de contenu, le programme d'application étant lié à une adresse web prédéterminée ;
une unité de détermination d'adresse web de destination configurée pour déterminer (S62) l'adresse web prédéterminée liée par le programme d'application en tant qu'adresse web de destination ; et
une unité d'extraction d'informations de contenu configurée pour extraire (S63) les informations de contenu depuis l'instruction de publication.

11. Routeur selon la revendication 7, dans lequel l'unité d'obtention d'objet (101) comprend :
une unité de réception de demande configurée pour recevoir (S71) une demande de publication particulière envoyée depuis un terminal utilisateur d'envoi à l'aide du navigateur, ou entrée depuis un dispositif d'entrée qui est connecté au routeur, la demande de publication particulière comprenant au moins une adresse web particulière et un contenu de publication particulier ;
une unité d'estimation d'adresse web configurée pour déterminer (S72) si une base de données d'adresses web prédéterminées comprend l'adresse web particulière ;
une unité d'extraction d'objet particulier configurée pour extraire (S73) l'adresse web particulière et le contenu particulier de la demande de publication particulière si la base de données d'adresse web prédéterminée comprend l'adresse web particulière ; et
une unité de détermination d'objet de destination configurée pour déterminer (S74) l'adresse web particulière en tant qu'adresse web de destination, et déterminer le contenu particulier en tant qu'informations de contenu.

12. Programme d'ordinateur, dans lequel lorsqu'il est exécuté sur un processeur d'un routeur, réalise un procédé selon l'une quelconque des revendications 1 à 6.
